# EUROPEAN PATENT APPLICATION

(11) **EP 3 326 862 A1**
(43) Date of publication of application: **30.05.2018**
(21) Application number: 16465557.3
(22) Date of filing: 29.11.2016
(51) Int. Cl.: B60Q 1/46, B60Q 1/14, G06K 9/00

(54) **APPARATUS FOR AUTOMATICALLY DEALING WITH A GLARE SITUATION CAUSED BY ONCOMING TRAFFIC**

(71) Applicant: Continental Automotive GmbH, 30165 Hannover (DE)
(72) Inventor: Son, Andrei, 300588 Timisoara (RO)
(74) Representative: Reuter, Andreas

(57) **Abstract**

The present apparatus relates to an apparatus (10) for automatically dealing with a glare situation caused by oncoming traffic. It is described to provide (210) a processing unit (30) with at least one image, the at least one image relating to a scene external to a vehicle. The processing unit determines (220) that a glare situation exists, comprising a determination that at least one intensity level within the at least one image exceeds a threshold intensity level. Information indicating that the glare situation exists is output (230). The output information is used (240) to activate a high beam mode of at least one headlamp of the vehicle.

## Description

### FIELD OF THE INVENTION

The present invention relates to an apparatus for automatically dealing with a glare situation caused by oncoming traffic, to a system for automatically dealing with a glare situation caused by oncoming traffic, to a method for automatically dealing with a glare situation caused by oncoming traffic, as well as to a computer program element.

### BACKGROUND OF THE INVENTION

The general background of this invention is the field of driving warning and information provision systems.

Drivers are frequently faced with the situation when night driving, when a driver coming in the opposite direction has left their lights on in the high beam or main (full) beam mode. This can lead to a glare situation that can be dangerous.

There is a need to address such a glare situation.

### SUMMARY OF THE INVENTION

It would be advantageous to have improved apparatus for determining and dealing with a glare situation.

The object of the present invention is solved with the subject matter of the independent claims, wherein further embodiments are incorporated in the dependent claims. It should be noted that the following described aspects and examples of the invention apply also for the apparatus for automatically dealing with a glare situation caused by oncoming traffic, the system for automatically dealing with a glare situation caused by oncoming traffic, the method for automatically dealing with a glare situation caused by oncoming traffic, and for the computer program element.

In a first aspect, there is provided an apparatus for automatically dealing with a glare situation caused by oncoming traffic, comprising:
- an input unit;
- a processing unit; and
- an output unit.

The input unit is configured to provide the processing unit with at least one image, the at least one image relating to a scene external to a vehicle. The processing unit is configured to determine that a glare situation exists, comprising a determination that at least one intensity level within the at least one image exceeds a threshold intensity level. The output unit is configured to output information indicating that the glare situation exists, wherein the output information is useable to activate a high beam mode of at least one headlamp of the vehicle.

In other words, when an intensity light level is determined to be above a threshold, the apparatus enables the automatic flashing of the headlamps to warn the oncoming vehicle that their light are on full beam (high beam). Therefore, the situation when a driver faces oncoming traffic when a driver has forgotten to put their lights into the dipped setting (low beam) is automatically dealt with. Normally, a driver will manually flash their headlights to the oncoming vehicle in the universally accepted way to indicate that their lights are on full beam. However, when being dazzled by oncoming lights some drivers may start to panic or forget that they could flash their headlights to warn the other driver that their vehicle is a causing potentially hazardous situation.

In this way, automation of one potential reaction to a frequent inconvenient situation a driver can face in during night-time scenarios is enabled. This leads to a reduction of distractions for the driver, and improves the driver's visibility due to lower glaring time due to high beam incoming traffic. Thus increased safety is provided.

In an example, the processing unit is configured to determine a distance to a source of light in the at least one image.

This enables the intensity level to take into account the fall off in intensity with the square of the distance.

In this manner, the threshold intensity level can take into account the distance to an oncoming car that is causing the glare situation, and can be adjusted to account for that distance. In example the adjustment with distance scales with the square of distance, such that the threshold level in two situations where in one an approaching car can be twice as far away as another car, the threshold level in one situation can be one quarter of that for the other. Not only does this mitigate incorrect operation of the headlamps flashing for cars that are close in front, but also enables cars at quite a considerable distance to be determined to have their headlamps on full beam, thus enabling automatic flashing of the headlamps to indicate to the other driver to turn their headlamps to the dipped position.

In an example, the output information is useable to de-activate the high beam mode of the at least one headlamp of the vehicle.

In other words, the headlights can flash on and off, mimicking the manual flashing that a driver will undertake when faced with an oncoming driver whose vehicle headlights are on main beam (high beam).

In an example, the input unit is configured to provide the processing unit with a status of at least one headlamp of the vehicle. The status can indicate if the at least one headlamp is in a high beam mode or has in the prior couple of seconds been in the high beam mode.

In an example, if the at least one headlamp is in the high beam mode or has in the prior couple of seconds been in the high beam mode, the output information is not useable to activate or de-activate the at least one headlamp of the vehicle.

Thus, if the driver of the vehicle has put the headlights onto main beam of has just taken them off main beam, this could indicate that the driver has themselves manually flashed the headlights to warn the oncoming car, or is in the process of doing so. The apparatus then holds off putting the head lamps to main beam to warn the oncoming driver.

In an example, the at least one image was acquired by at least one camera of the vehicle.

Thus a normal camera of a vehicle that forms for example a part of an Advanced Driver Assistance System (ADAS) can be used to determine if a glare situation caused by the head lamps of an oncoming vehicle being on high beam, enabling the vehicle to automatically operate its own headlamps in response.

In an example, the determination that a glare situation exists comprises a determination of at least one position in the at least one image where the at least one intensity level exceeds the threshold intensity value.

Thus, glare from for example the sun or streetlamps, can be determined not to be associated with oncoming traffic, because the determined position is not consistent with that for an oncoming vehicle. In such a case, the output information reflects this situation, and the vehicles own headlamps will not automatically flash. However, if the source of light is consistent with it coming from an oncoming vehicle then the output information can be used to flash the headlamps.

In an example, the determination that a glare situation exists comprises a determination of at least one position in the at least one image associated with a vehicular object.

In other words, the processing unit analyses the acquired imagery to determine if a vehicular object is present and if so, what its position is. In this way, it can be better determined if the glare situation is being caused by an oncoming vehicle.

In an example, the determination that a glare situation exists comprises a correlation of the at least one position in the at least one image where the at least one intensity level exceeds the threshold intensity value with the at least one position in the at least one image associated with the vehicular object.

In other words, it is determined if the source of light associated with the glare situation is at the position of a car in the field of view, leading to a very high level of confidence that that car's headlamps are causing the glare situation, and the vehicles' own headlights can be flashed in response.

In a second aspect, there is provided a system for automatically dealing with a glare situation caused by oncoming traffic, comprising:
- at least one camera;
- an apparatus for automatically dealing with a glare situation caused by oncoming traffic according to the first aspect.

The at least one camera is configured to be located on or within a vehicle and the at least one camera is configured to acquire the at least one image relating to a scene external to the vehicle.

In a third aspect, there is provided a method for automatically dealing with a glare situation caused by oncoming traffic, comprising:
a) providing a processing unit with at least one image, the at least one image relating to a scene external to a vehicle;
b) determining by the processing unit that a glare situation exists, comprising a determination that at least one intensity level within the at least one image exceeds a threshold intensity level;
c) outputting information indicating that the glare situation exists; and
d) using the output information to activate a high beam mode of at least one headlamp of the vehicle.

According to another aspect, there is provided a computer program element controlling apparatus as previously described which, in the computer program element is executed by processing unit, is adapted to perform the method steps as previously described.

There is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of an apparatus for automatically dealing with a glare situation caused by oncoming traffic;
Fig. 2 shows a schematic set up of an example of a system for automatically dealing with a glare situation caused by oncoming traffic;
Fig. 3 shows a method for automatically dealing with a glare situation caused by oncoming traffic; and
Fig. 4 shows an example of a detailed workflow for a Head Lamp Assist (HLA) system for automatically dealing with a glare situation caused by oncoming traffic.

### DETAILED DESCRIPTION OF EMBODIMENTS

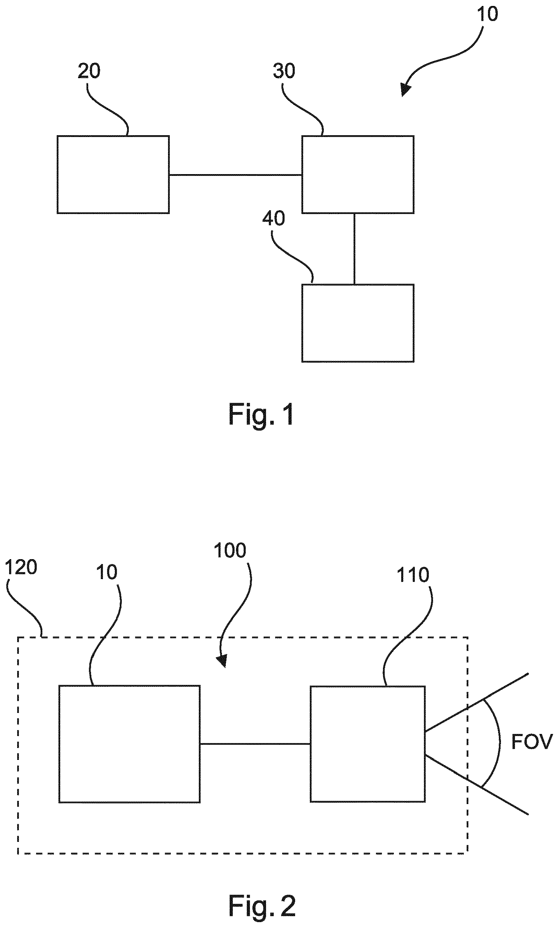

Fig. 1 shows an example of apparatus 10 for automatically dealing with a glare situation caused by oncoming traffic. The apparatus comprises an input unit 20, a processing unit 30, and an output unit 40. The input unit 20 is configured to provide the processing unit 30 with at least one image via wired or wireless communication. The at least one image relates to a scene external to a vehicle. The processing unit 30 is configured to determine that a glare situation exists, comprising a determination that at least one intensity level within the at least one image exceeds a threshold intensity level. The output unit 40 is configured to output information indicating that the glare situation exists. The output information is useable to activate a high beam mode of at least one headlamp of the vehicle.

Thus in an example the output information can be passed to a headlamp control unit that processes it and uses it to control the headlamps, or in another example the output information is directly useable to control the headlamps.

In an example, the threshold intensity level is determined from the intensity level associated with a vehicle operating its headlamps in low beam or on dipped beam. Thus this forms a baseline level, where a light level above this intensity can indicate that the oncoming vehicle's headlamps are on full or main (high) beam.

According to an example, the processing unit is configured to determine a distance to a source of light in the at least one image.

In an example, the at least one image comprises two images acquired at different spatial positions, with the distance to the oncoming car being determined from these images using normal stereoscopic techniques. In other words, the processing unit is using the at least one image in the form of two images to determine a distance to the source of light.

In an example, the distance to the source of light is determined on the basis of radar and/or lidar data (distance relevant data), that can be alternative to or in addition to stereoscopic image data. Thus, in these examples the input unit is configured to provide processing unit with the distance relevant data, and the processing unit determines or extracts the distance to the source of light using the distance relevant data and the at least one image.

In an example, an appropriate image processing algorithm is used as part of the distance determination.

According to an example, the output information is useable to de-activate the high beam mode of the at least one headlamp of the vehicle.

According to an example, the input unit is configured to provide the processing unit with a status of at least one headlamp of the vehicle. The status can indicate if the at least one headlamp is in a high beam mode or has in the prior couple of seconds been in the high beam mode.

According to an example, if the at least one headlamp is in the high beam mode or has in the prior couple of seconds been in the high beam mode, the output information is not useable to activate or de-activate the at least one headlamp of the vehicle.

In an example after a short time period of one or several seconds, if the glare situation is determined to continue to exist then the apparatus can output information that will cause the headlamps to go to main beam, and in an example flash.

According to an example, the at least one image was acquired by at least one camera of the vehicle.

According to an example, the determination that a glare situation exists comprises a determination of at least one position in the at least one image where the at least one intensity level exceeds the threshold intensity value. In an example, an appropriate image processing algorithm is used in this determination.

In an example, the processing unit is configured to determine a position of the road. In this way, if the position of the source of light is at a position consistent with an oncoming car being on the road, the output information can be used to flash the headlamps. In an example, an appropriate image processing algorithm is used in this determination.

According to an example, the determination that a glare situation exists comprises a determination of at least one position in the at least one image associated with a vehicular object. In an example, an appropriate image processing algorithm is used in this determination, which can utilize vehicle recognition algorithms.

According to an example the determination that a glare situation exists comprises a correlation of the at least one position in the at least one image where the at least one intensity level exceeds the threshold intensity value with the at least one position in the at least one image associated with the vehicular object.

Fig. 2 shows an example of a system 100 for automatically dealing with a glare situation caused by oncoming traffic. The system 100 comprises at least one camera 110, an apparatus 10 for automatically dealing with a glare situation caused by oncoming traffic as described with respect to Fig. 1. The at least one camera 110 is configured to be located on or within a vehicle 120. The at least one camera 110 is configured to acquire the at least one image relating to a scene external to the vehicle.

In an example, the at least one camera 110 is the input unit 20.

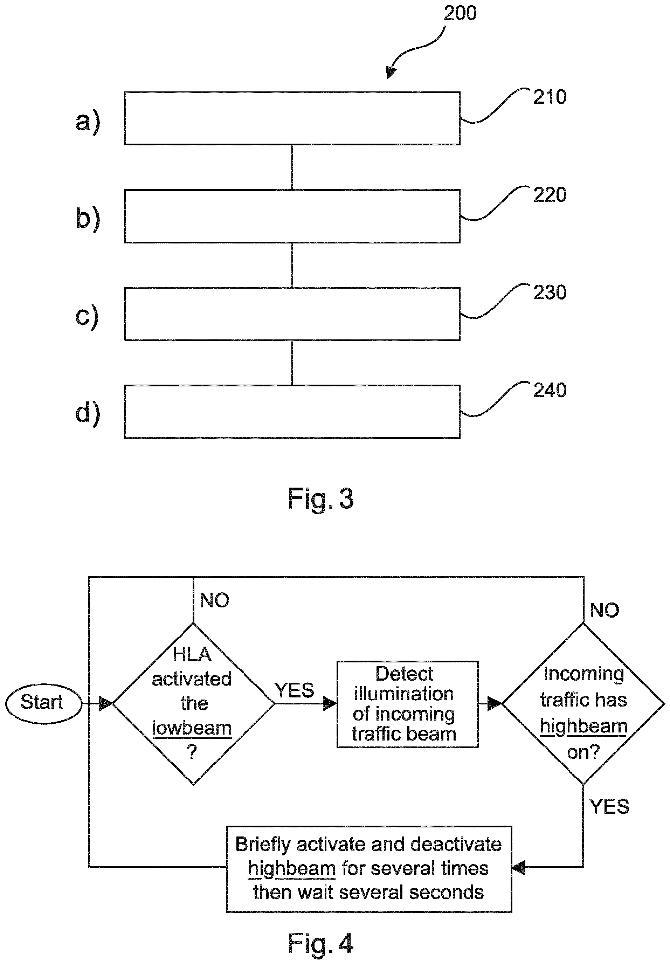

Fig. 3 shows a method 200 for automatically dealing with a glare situation caused by oncoming traffic in its basic steps. The method 200 comprises:
in a providing step 210, also referred to as step a), providing a processing unit 30 with at least one image, the at least one image relating to a scene external to a vehicle;
in a determining step 220, also referred to as step b), determining by the processing unit that a glare situation exists, comprising a determination that at least one intensity level within the at least one image exceeds a threshold intensity level;
in an outputting step 230, also referred to as step c), outputting information indicating that the glare situation exists; and
in a using step 240, also referred to as step d), using the output information to activate a high beam mode of at least one headlamp of the vehicle.

In an example, step b) comprises determining a distance to a source of light in the at least one image.

In an example, in step a) the providing is from an input unit 20 to the processing unit 30.

In an example, in step c) the outputting is by an output unit 40.

In an example, the method comprises using the output information to de-activate the high beam mode of the at least one headlamp of the vehicle.

In an example, step a) comprises providing the processing unit with a status of at least one headlamp of the vehicle, the status indicating if the at least one headlamp is in a high beam mode or has in the prior couple of seconds been in the high beam mode.

In an example, the method comprises determining if the at least one headlamp is in the high beam mode or has in the prior couple of seconds been in the high beam mode, and wherein the output information is not used to activate or de-activate the at least one headlamp of the vehicle.

In an example, the at least one image was acquired by at least one camera of the vehicle.

In an example, step b) comprises determining at least one position in the at least one image where the at least one intensity level exceeds the threshold intensity value.

In an example, step b) comprises determining at least one position in the at least one image associated with a vehicular object.

In an example, step b) comprises correlating the at least one position in the at least one image where the at least one intensity level exceeds the threshold intensity value with the at least one position in the at least one image associated with the vehicular object.

The apparatus, system and method are now described in further detail with respect to Fig. 4.

Fig. 4 shows a detailed work flow for determining a glare situation caused by oncoming traffic, and how that glare situation can be acted upon by automatically flashing the headlamps one or several times to the high beam. This Head Lamp Assist (HLA) system uses and builds on the features discussed above in relation to Figs. 1-3. This mimics the normal way an experienced driver will try to indicate to the approaching driver that their headlamps are in the main beam position, and try to get them to switch the headlamps to the low beam or dipped configuration. The glare situation if unaddressed can be dangerous, where the driver has difficulty maintaining clear visibility. Even experienced drivers can find it difficult to manually flash the headlamps in such a situation, and/or indeed they might be in the process of adjusting another console control. This situation can be exacerbated for inexperienced or elderly drivers who might panic when faced with such a glare situation. The presently described apparatus, system and method address these issues by automatically flashing the headlights to notify the approaching driver that they need to take remedial action.

Continuing with Fig. 4, it is first determined if the headlamps of the vehicle being driven are already in the high beam configuration. If they are a period of time is allowed to elapse until the headlamps are in the low beam configuration. If the headlamps were originally in the low beam configuration, or have just entered the low beam configuration, imagery acquired by one or more forward looking cameras is analyzed using image processing algorithms to detect the illumination of oncoming traffic. From knowledge of the expected intensity of light acquired for oncoming traffic that is operating with lights in the low (dipped) beam configuration, a threshold level of intensity is set. This can account for how far away the oncoming car is determined to be. If the detected illumination is above this threshold the main beams of the vehicle are briefly activated and deactivated several times in order to flash the headlamps. Several seconds are allowed to elapse, before the process iterates in order that the headlamps do not continuously flash.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. Apparatus (10) for automatically dealing with a glare situation caused by oncoming traffic, comprising:
- an input unit (20);
- a processing unit (30); and
- an output unit (40);
wherein, the input unit is configured to provide the processing unit with at least one image, the at least one image relating to a scene external to a vehicle;
wherein, the processing unit is configured to determine that a glare situation exists, comprising a determination that at least one intensity level within the at least one image exceeds a threshold intensity level; and
wherein, the output unit is configured to output information indicating that the glare situation exists, wherein the output information is useable to activate a high beam mode of at least one headlamp of the vehicle.

2. Apparatus according to claim 1, wherein the processing unit is configured to determine a distance to a source of light in the at least one image.

3. Apparatus according to any of claims 1-2, wherein the output information is useable to de-activate the high beam mode of the at least one headlamp of the vehicle.

4. Apparatus according to any of claims 1-3, wherein the input unit is configured to provide the processing unit with a status of at least one headlamp of the vehicle, the status indicating if the at least one headlamp is in a high beam mode or has in the prior couple of seconds been in the high beam mode.

5. Apparatus according to claim 4, wherein if the at least one headlamp is in the high beam mode or has in the prior couple of seconds been in the high beam mode, the output information is not useable to activate or de-activate the at least one headlamp of the vehicle.

6. Apparatus according to any of claims 1-5, wherein the at least one image was acquired by at least one camera of the vehicle.

7. Apparatus according to any of claims 1-6, wherein the determination that a glare situation exists comprises a determination of at least one position in the at least one image where the at least one intensity level exceeds the threshold intensity value.

8. Apparatus according to any of claims 1-7, wherein the determination that a glare situation exists comprises a determination of at least one position in the at least one image associated with a vehicular object.

9. Apparatus according to claims 7 and 8, wherein the determination that a glare situation exists comprises a correlation of the at least one position in the at least one image where the at least one intensity level exceeds the threshold intensity value with the at least one position in the at least one image associated with the vehicular object.

10. A system (100) for automatically dealing with a glare situation caused by oncoming traffic, comprising:
- at least one camera (110);
- an apparatus (10) for automatically dealing with a glare situation caused by oncoming traffic according to any of claims 1-8;
wherein, the at least one camera is configured to be located on or within a vehicle (120) and the at least one camera is configured to acquire the at least one image relating to a scene external to the vehicle.

11. A method (200) for automatically dealing with a glare situation caused by oncoming traffic, comprising:
a) providing (210) a processing unit (30) with at least one image, the at least one image relating to a scene external to a vehicle;
b) determining (220) by the processing unit that a glare situation exists, comprising a determination that at least one intensity level within the at least one image exceeds a threshold intensity level;
c) outputting (230) information indicating that the glare situation exists; and
d) using (240) the output information to activate a high beam mode of at least one headlamp of the vehicle.

12. A computer program element for controlling an apparatus according to any one of claims 1 to 9 and/or a system according to claim 10, which when executed by a processor is configured to carry out the method of claim 11.
